# EUROPÄISCHE PATENTSCHRIFT

(11) **EP 4 440 319 B1**
(45) Veröffentlichungstag und Bekanntmachung des Hinweises auf die Patenterteilung: **13.08.2025**
(21) Anmeldenummer: 22826331.5
(22) Anmeldetag: 02.12.2022
(51) Int. Cl.: A22C 17/00, F16J 15/06, B02C 18/06

(54) **DICHTUNGSANORDNUNG; DICHTUNGSKONZEPT**
SEAL ASSEMBLY, SEAL DESIGN
ENSEMBLE JOINT D'ÉTANCHÉITÉ, STRUCTURE DE JOINT D'ÉTANCHÉITÉ

(30) Priorität: 03.12.2021 DE 102021131901
(43) Veröffentlichungstag der Anmeldung: 09.10.2024
(73) Patentinhaber: Maschinenfabrik Seydelmann KG, 70174 Stuttgart (DE)
(72) Erfinder: SEYDELMANN, Andreas Max, 70174 Stuttgart (DE)
(74) Vertreter: Patentanwälte Schuster, Müller & Partner mbB
(86) Internationale Anmeldenummer: PCT/DE2022/100903
(87) Internationale Veröffentlichungsnummer: WO 2023/098947

(56) Entgegenhaltungen:
- AT-B- 410 060
- DE-A1- 102019 009 139
- US-A- 4 192 515
- US-A1- 2019 113 141
- US-B1- 6 354 566

## Beschreibung

### Stand der Technik

Die Erfindung geht aus von einer Dichtungsanordnung, nach der Gattung des Anspruchs 1, und einem Dichtungskonzept, nach der Gattung des Anspruchs 9.

Dichtelemente bzw. Dichtungen zum Abdichten von Kontaktflächen zwischen einzelnen Bauteilen sind hinreichend bekannt. Zumeist sind diese in einer Aussparung bzw. Dichtungsnut eines Bauteils gelagert, aus der sie partiell herausragen, um in Verbindung mit dem zweiten Bauteil die Kontaktfläche bzw. Dichtungsfläche zu verschließen.

In medien- oder materialfördernden oder diese verarbeitenden Systemen kommt den Dichtelementen eine hohe Bedeutung zu, da diese einerseits den Austritt von Fördergut verhindern und andererseits einer Verunreinigung von selbigem durch externes Material vorbeugen. Letzteres ist insbesondere in der Lebensmittelindustrie mit ihren hohen Hygienestandards von entscheidender Bedeutung. So finden sich unterschiedliche Dichtelemente beispielsweise bei Kuttern, die zum Zerkleinern und Mischen von Lebensmitteln, insbesondere Fleisch, verwendet werden. Kutter bestehen typischerweise aus einer, um eine senkrechte Achse waagerecht drehbare Schüssel, die auf einem Maschinenständer gelagert ist, einem die Schüssel nach oben abschließenden Deckel und einem im so gebildeten Innenraum angebrachten Werkzeug, insbesondere ein Messerwerkzeug oder ein Rührwerkzeug. Der Innenraum kann durch zumindest partielle Evakuierung zusätzlich von Verunreinigungen frei gehalten werden, was eine ausreichend gute Abdichtung erfordert. So offenbaren bereits die DE 21 55 647 C3 und die DE 38 19 590 A1 einen statischen Dichtrand, der die mit einem Deckel geschlossene Schüssel abdichtet. Im Betrieb bewegt sich die Schüssel relativ zum Deckel und Maschinenständer. Nachteilig ist folglich, dass die Rotation der Schüssel zu einem erhöhten Abrieb der statischen Dichtungen führt und somit die Dichtwirkung schnell nachlässt.

Neben statischen Dichtungen kommen hierbei auch rotatorische Dichtungen zum Einsatz, wie beispielsweise in der AT 410 060 B gemäß der Präambel von Anspruch 1 offenbart, die eine Abdichtung von sich gegeneinander relativ bewegenden Bauteilen erlauben. Eine solche offenbart auch die DE 10 2019 111 126 B3, die eine federnd gelagerte Gleitdichtung für Kutter mit zwei Arten von Armelementen beschreibt, die ein elastisches Abstützen und Nachspannen der Dichtelemente in der Dichtungsnut ermöglichen. Ähnliche federnd gelagerte Gleitdichtungen sind auch bereits aus der DE 102 37 414 A1 bekannt, in der diese zum Abdichten eines Flügelrads eines Schwenkmotors und dem dieses umgebenden Bauteils offenbart werden, wobei in diesem Fall zusätzlich mit der Beaufschlagung mit einem Druckmittel gearbeitet wird. Die in der DE 10 2019 111 126 B3 beschriebenen Dichtelemente, wie auch das aus der DE 102 37 414 A1 bekannte Dichtelement, haben den Nachteil, dass sie aus einem einzigen Material gefertigt sind und so der zwangsläufig auftretende Abrieb hauptsächlich im Bereich der Federelemente bzw. Armelemente auftritt.

Der Erfindung liegt daher die Aufgabe zu Grunde, eine die Nachteile des Standes der Technik überwindende Dichtungsanordnung und ein die Nachteile des Standes der Technik überwindendes Dichtungskonzept bereitzustellen.

### Die Erfindung und ihre Vorteile

Die erfindungsgemäße Dichtungsanordnung, mit den Merkmalen des Anspruchs 1, und das erfindungsgemäße Dichtungskonzept, mit den Merkmalen des Anspruchs 9, haben demgegenüber den Vorteil, dass die Dichtungsanordnung aus mindestens einem Dichtelement, das einen Dichtungskörper aufweist, wobei der Dichtungskörper mindestens eine Oberseite, mindestens eine Unterseite und mindestens eine Längsseite aufweist, und mindestens einer Dichtungsnut, wobei die Dichtungsnut einen Nutboden und mindestens eine Nutwand aufweist, wobei mindestens ein Dichtelement gleitend in der Dichtungsnut gelagert ist, besteht und mindestens ein Federelement eine Blattfeder ist und der Dichtungskörper mindestens eines Dichtelements mit mindestens einer Längsseite schlüssig an mindestens einer Nutwand anliegt und zwischen dem Nutboden und dem Dichtungskörper mindestens ein Federelement angeordnet ist, wobei mindestens ein Federelement aus mindestens einem anderen Material besteht als der Dichtungskörper und mindestens ein Federelement aus einem härteren Material besteht als der Dichtungskörper, oder der Dichtungskörper mindestens eines Dichtelements mit mindestens einer Ober- und/oder Unterseite schlüssig am Nutboden anliegt und zwischen mindestens einer Nutwand und dem Dichtungskörper mindestens ein Federelement angeordnet ist, wobei mindestens ein Federelement aus mindestens einem anderen Material besteht als der Dichtungskörper und mindestens ein Federelement aus einem härteren Material besteht als der Dichtungskörper, wodurch eine bessere Abdichtung und/oder eine einfachere Reinigung ermöglicht werden, da sich die Dichtungsanordnung selbst nachstellt und so Verschleiß ausgleicht und das Dichtelement bevorzugt werkzeuglos austauschbar und einfach zur Reinigung des Dichtungselements und der Dichtungsnut herausnehmbar ist. Durch die gleitende Lagerung kann das Dichtelement auch bei sich gegeneinander verschiebenden Bauteilen seiner Funktion gerecht werden. Die Federelemente erlauben somit ein Gleiten des Dichtelements im Bereich der Dichtungsnut. Zudem kann das Material der Federelemente und der Dichtung individuell angepasst werden. Bevorzugt liegt die Längsseite des Dichtungskörpers schlüssig an einer Nutwand an, insbesondere, sofern die Dichtung mindestens teilweise im Kreis geführt wird, liegt die Längsseite des Dichtungskörpers schlüssig an der Innenwand, bezogen auf die Kreisbahn, an. Dies hat, bei umschließender Abdichtung, den Vorteil, dass kein Material oder Medium aus dem Innenbereich hinaus gelangen kann und insbesondere kein Material oder Medium in den Dichtbereich eindringen kann. Bevorzugt sind die Federelemente vollständig in der Dichtungsnut versenkt und ragen nicht aus dieser hervor.

Dadurch, dass mindestens ein Dichtelement gleitend in der Dichtungsnut gelagert ist, kann das Dichtelement auch bei sich gegeneinander verschiebenden Bauteilen seiner Funktion gerecht werden. Die Federelemente erlauben somit ein Gleiten des Dichtelements im Bereich der Dichtungsnut.

Nach einer vorteilhaften Ausgestaltung der erfindungsgemäßen Dichtungsanordnung ist mindestens ein Federelement an der Ober- und/oder Unterseite des Dichtelements oder mindestens ein Federelement am Nutboden und/oder der Nutwand angebracht.

Nach einer zusätzlichen vorteilhaften Ausgestaltung der erfindungsgemäßen Dichtungsanordnung ist mindestens ein Dichtelement zwischen zwei Nutwänden positioniert, sodass dieses jeweils mit einer Längsseite an je einer Nutwand anliegt. Dies ermöglicht die Verwendung eines nicht gespannten Dichtungselements. Denkbar wäre auch, dass an Stelle der zweiten Nutwand ein Haltelement auf eine Längsseite des Dichtungselements drückt, sodass dieses gegen die eine Nutwand gedrückt wird. Ferner wäre es denkbar, dass die Nutwände unterschiedlich hoch sind. In diesem Zusammenhang wäre es auch denkbar, dass zwei Nutwände vorliegen und zusätzlich mindestens ein Halteelement auf eine Längsseite des Dichtungselements drückt.

Nach einer zusätzlichen vorteilhaften Ausgestaltung der erfindungsgemäßen Dichtungsanordnung ist mindestens ein Federelement lösbar am Dichtungskörper, an einer Nutwand und/oder am Nutboden angebracht. Dies hat den Vorteil, dass defekte Federelemente einfach ausgetauscht werden können oder auch verdreckte Federelemente zur Reinigung einfach entnommen werden können.

Nach einer zusätzlichen vorteilhaften Ausgestaltung der erfindungsgemäßen Dichtungsanordnung ist der Dichtungskörper einteilig und/oder mindestens teilweise flexibel biegbar. Denkbar wären selbstverständlich auch mehrteilige Dichtungskörper, die jedoch den Nachteil haben, dass zusätzliche Kanten auftreten, die insbesondere Verunreinigungen anlagern können. Denkbar wäre es, dass ein einteiliger Dichtungskörper aus einem Stück gefertigt wird, was seine innere Integrität und Stabilität erhöht. Sofern der Dichtungskörper nicht mindestens teilweise flexibel biegbar ist, wäre es denkbar, dass mehrere der jeweiligen Anwendung entsprechende formangepasste Dichtelemente verwendet werden. Denkbar wäre es auch, dass je nach Anwendungsgebiet auch Komposit- oder mehrteilige Dichtungskörper verwendet werden, die beispielsweise bei unterschiedlichen Temperaturen zum Einsatz kommen oder beispielweise hohe Materialbeständigkeit mit einer guten Dichtfunktionalität verbinden.

Nach einer zusätzlichen vorteilhaften Ausgestaltung der erfindungsgemäßen Dichtungsanordnung besteht mindestens ein Federelement aus einem härteren Material als der Dichtungskörper. So könnte der Dichtungskörper aus einem elastischen biegbaren Material und die Federelemente aus einem härteren Material bestehen, sodass der Verschleiß primär auf Seiten des Dichtelements von statten geht und die Federelemente nicht so stark unter Abrieb leiden. Durch ein weicheres Material für den Dichtungskörper kann bei stärkerer Verformbarkeit auch eine höhere Abdichtung erreicht werden.

Nach einer zusätzlichen vorteilhaften Ausgestaltung der erfindungsgemäßen Dichtungsanordnung ist mindestens ein Federelement eine Schraubenfeder oder eine Drahtfeder.

Nach einer zusätzlichen vorteilhaften Ausgestaltung der erfindungsgemäßen Dichtungsanordnung weist der Dichtungskörper mindestens zwei Stirnseiten auf.

Nach einer diesbezüglichen vorteilhaften Ausgestaltung der erfindungsgemäßen Dichtungsanordnung ist eine Stirnseite so geformt, dass sie formschlüssig mit einer anderen Stirnseite desselben Dichtelements oder eines zweiten Dichtelements in Verbindung gebracht werden kann. Denkbar wäre es, dass die Stirnseiten in Form von männlich-weiblich-Verbindungselementen ausgebildet sind.

Nach einer zusätzlichen vorteilhaften Ausgestaltung der erfindungsgemäßen Dichtungsanordnung besteht der Dichtungskörper aus Messing, Ethylen-Propylen-Dien-Kautschuk (EPDM), Nitirl-Butadien-Kautschuk (NBR), Fluor-Kautschuk (FKM), hochfluoriertem FKM, Silikon, Polytetrafluorethylen (PTFE) und/oder Thermoplastischem Polyurethan (TPU). Denkbar wäre auch, dass mindestens zwei unterschiedliche Materialien verwendet werden, insbesondere mindestens zwei aus den zuvor genannten.

Nach einer vorteilhaften Ausgestaltung des erfindungsgemäßen Dichtungskonzepts zum Abdichten eines Kutters, wobei der Kutter eine rotierbare Schüssel, einen Deckel und einen Maschinenständer aufweist und zwischen dem Deckel und der Schüssel eine Öffnung gebildet wird, wobei an der Öffnung schüssel- und/oder deckelseitig eine Dichtungsnut ausgebildet ist, wobei die Dichtungsnut einen Nutboden und mindestens eine Nutwand aufweist, wobei mindestens ein Dichtelement gleitend in der Dichtungsnut gelagert ist, und mindestens ein Federelement eine Blattfeder ist und mindestens ein Dichtelement, das einen Dichtungskörper aufweist, wobei der Dichtungskörper mindestens eine Oberseite, mindestens eine Unterseite und mindestens eine Längsseite aufweist, verwendet wird und der Dichtungskörper mindestens eines Dichtelements mit mindestens einer Längsseite schlüssig an mindestens einer Nutwand anliegt und zwischen dem Nutboden und dem Dichtungskörper mindestens ein Federelement angeordnet ist, wobei mindestens ein Federelement aus mindestens einem anderen Material besteht als der Dichtungskörper und mindestens ein Federelement aus einem härteren Material besteht als der Dichtungskörper oder der Dichtungskörper mindestens eines Dichtelements mit mindestens einer Ober- und/oder Unterseite schlüssig am Nutboden anliegt und zwischen mindestens einer Nutwand und dem Dichtungskörper mindestens ein Federelement angeordnet ist, wobei mindestens ein Federelement aus mindestens einem anderen Material besteht als der Dichtungskörper und mindestens ein Federelement aus einem härteren Material besteht als der Dichtungskörper, ist zwischen dem Maschinenständer und der Schüssel und/oder zwischen dem Deckel und dem Maschinenständer mindestens ein weiteres Dichtelement angeordnet. Dadurch wird ein Gesamtdichtungskonzept sichergestellt, in welchem eine Verunreinigung sowohl des Produktraums als auch des Maschinenraums verhindert wird, wodurch ein langlebiger Betrieb und eine Lebensmittelrichtlinien konforme Produktion ermöglicht wird.

Nach einer zusätzlichen vorteilhaften Ausgestaltung des erfindungsgemäßen Dichtungskonzepts weist mindestens ein Dichtelement zwischen dem Maschinenständer und der Schüssel mindestens eine Dichtlippe auf. Diese verhindert, dass ein Fremdmedium, wie beispielsweise Dampf, aus dem Bereich unterhalb der Schüssel in den Produktraum eindringen kann.

Nach einer diesbezüglichen vorteilhaften Ausgestaltung des erfindungsgemäßen Dichtungskonzepts die Dichtlippe von der Schüssel weg gebogen. Dies sorgt dafür, dass durch ein gasförmiges Medium, wie beispielsweise Dampf Dampfdruck aus dem Bereich unterhalb der Schüssel die Dichtlippe angedrückt wird und so zusätzlich eine Öffnung zwischen der Schüssel und dem Maschinenständer verschließt.

Weitere Vorteile und vorteilhafte Ausgestaltung der Erfindung sind der nachfolgenden Beschreibung, den Ansprüchen und den Zeichnungen entnehmbar.

### Zeichnungen

Bevorzugte Ausführungsbeispiele des erfindungsgemäßen Gegenstands sind in den Zeichnungen dargestellt und werden im Folgenden näher erläutert. Es zeigen
- Fig. 1: eine schematische Zeichnung eines erfindungsgemäßen Dichtelements mit einer Aussparung zur Befestigung eines Federelements,
- Fig. 2: eine schematische Zeichnung eines alternativen erfindungsgemäßen Dichtelements mit einem angeschraubten Federelement,
- Fig. 3: eine schematische Zeichnung einer erfindungsgemäßen Dichtungsanordnung,
- Fig. 4: eine schematische Zeichnung einer erfindungsgemäßen Dichtungsanordnung mit am Nutboden angebrachtem Federelement,
- Fig. 5: eine schematische Zeichnung eines Kutters mit erfindungsgemäßen Dichtungskonzept,
- Fig. 6: eine Detailansicht eines Kutters mit einem erfindungsgemäßen Dichtelement zwischen der Schüssel und dem Deckel und
- Fig. 7: eine Detailansicht eines Kutters mit einem erfindungsgemäßen Dichtelement zwischen der Schüssel und dem Maschinenständer.

### Beschreibung der Ausführungsbeispiele

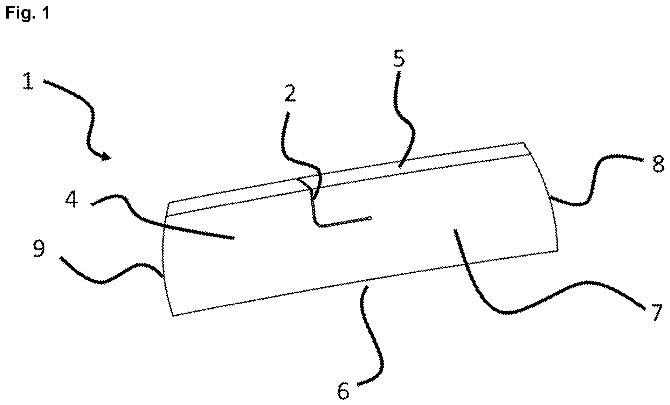

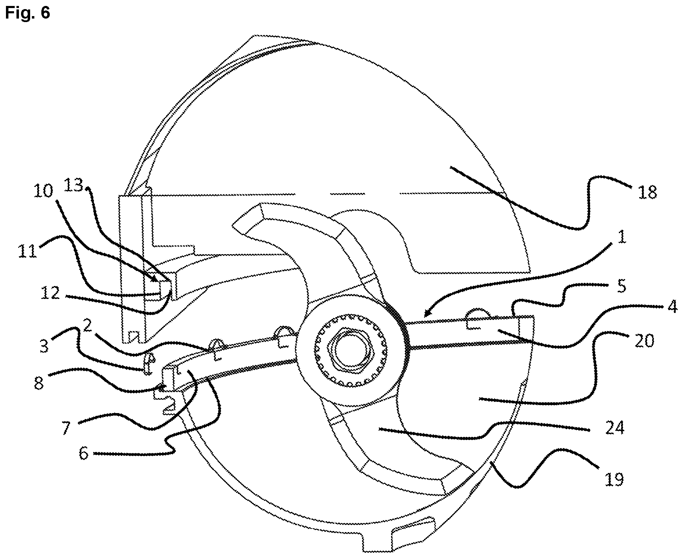

Fig. 1 zeigt eine schematische Zeichnung eines erfindungsgemäßen Dichtelements 1 mit einer Aussparung 2 zur Befestigung eines beispielsweise in Fig. 6 dargestellten Federelements 3. Das Dichtelement 1 weist einen Dichtungskörper 4 auf, wobei der Dichtkörper 4 eine Oberseite 5 und eine Unterseite 6, sowie je zwei Längsseiten 7 und zwei Stirnseiten 8 und 9 aufweist. Von der Oberseite 5 ausgehend weist der Dichtungskörper 4 einen L-förmigen Schlitz als Aussparung 2 auf, in den ein Federelement 3 eingeschoben werden kann. Es versteht sich von selbst, dass diese Ausführungsform lediglich eine auf die minimalen Merkmale beschränkte Darstellung wiedergibt, da bevorzugt eine Vielzahl von Federelementen 3 am Dichtungskörper 4 befestigt sind und somit bei gegebener Ausführungsform mehrere L-förmige oder auch anders geformte Schlitze im Dichtungskörper 4 vorliegen.

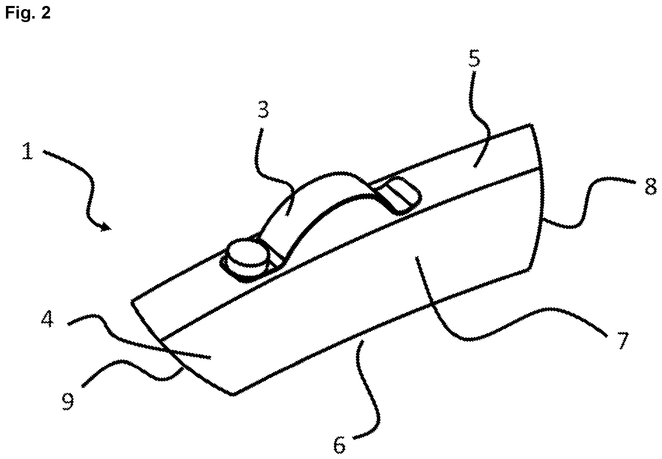

Fig. 2 zeigt eine schematische Zeichnung eines alternativen erfindungsgemäßen Dichtelements 1 mit einem angeschraubten Federelement 3. Das Federelement 3, welches als Blattfeder ausgestaltet ist, ist an der Oberseite 5 des Dichtungskörpers 4 angeschraubt und so an diesem befestigt.

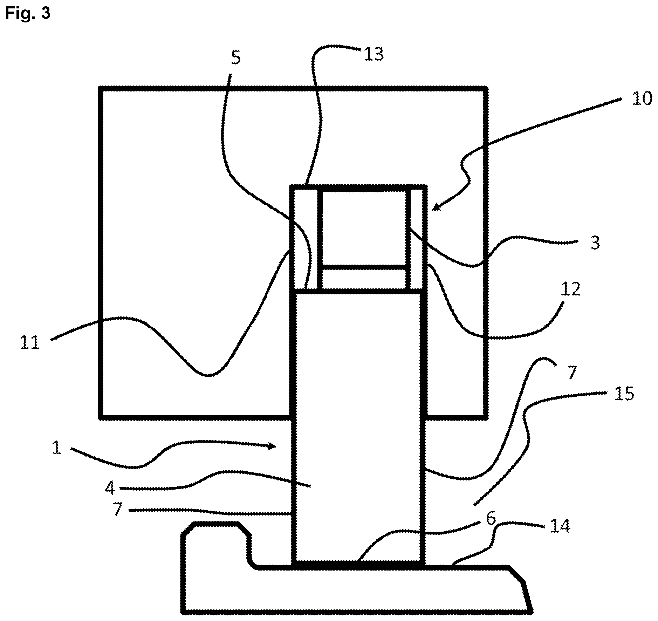

Fig. 3 zeigt eine schematische Zeichnung einer erfindungsgemäßen Dichtungsanordnung mit einem Dichtelement 1, gemäß der Ausführungsform in Fig. 2. In eine Dichtungsnut 10, welche zwei parallel gegenüberliegenden Nutwände 11 und 12 und einen Nutboden 13 aufweist, ist ein Dichtelement 1 so eingesetzt, dass die Nutwände 11 und 12 jeweils schlüssig mit den Längsseiten 7 des Dichtelements 1 in Kontakt stehen. Das am Dichtelement 1 befestigte Federelement 3 ist in der Dichtungsnut 10 versenkt, so dass es sich zwischen der Oberseite 5 des Dichtungskörpers 4 und dem Nutboden 13 befindet. Der Dichtungskörper 4 ragt über die Dichtungsnut 10 bzw. die Nutwände 11 und 12 hinaus, sodass die Unterseite 6 des Dichtelements 1 mit einem Bauteil 14 in Kontakt gebracht werden kann, um so eine Öffnung 15 zwischen der Dichtungsanordnung, umfassend Dichtungsnut 10 und Dichtelement 1, und dem weiteren Bauteil 14 abdichten kann. Sofern das weitere Bauteil 14 relativ zu dem die Dichtungsnut 10 aufweisenden Bauteil bewegt wird, kann das Dichtelement 1 über die Federelemente 3 in der Dichtungsnut 10 gleiten und wird so weder deformiert, noch verliert es seine abdichtende Wirkung, da es auch bei der Relativbewegung mit dem Bauteil 14 kraftschlüssig verbunden bleiben kann.

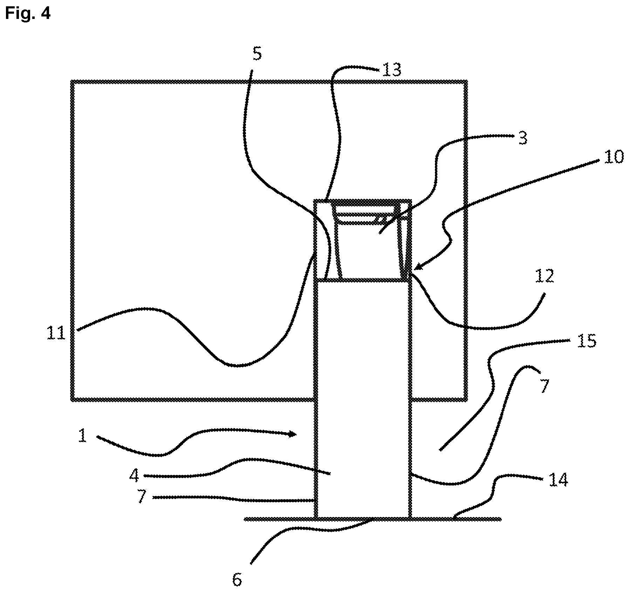

Fig. 4 zeigt eine schematische Zeichnung einer erfindungsgemäßen Dichtungsanordnung mit am Nutboden 13 angebrachtem Federelement 3. In dieser Ausführungsform sind mehrere Federelemente 3 auf dem Nutboden 13 befestigt und das Dichtelement 1 bzw. Dichtungskörper 4 ist so in die Dichtungsnut 10 eingeschoben, dass die Oberseite 5 des Dichtungskörpers 4 mit den Federelementen 3 in Kontakt kommt und, bei einer Relativbewegung zwischen dem die Dichtungsnut 10 aufweisenden Bauteil und einem mit der Unterseite 6 des Dichtungskörpers 4 in Kontakt stehenden Bauteil 14, über diese gleitet.

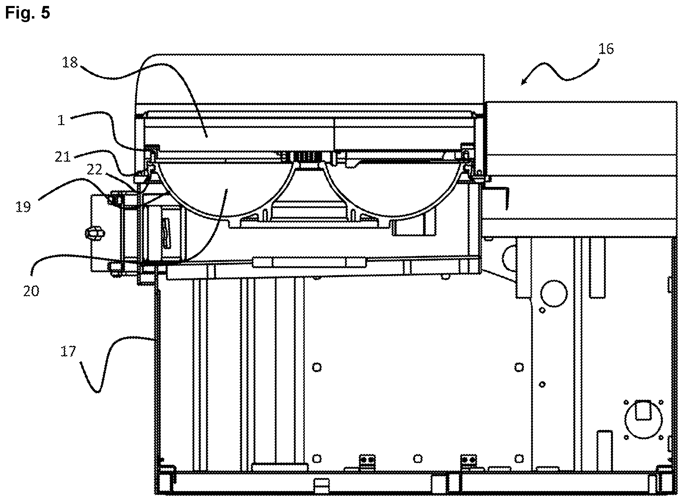

Fig. 5 zeigt eine schematische Zeichnung eines Kutters 16 mit erfindungsgemäßen Dichtungskonzept. Der Kutter 16, welcher einen Maschinenständer 17, einen Deckel 18 und eine Schüssel 19 aufweist, weist dabei zwischen der Schüssel 19 und dem Deckel 18 eine Dichtungsanordnung, gemäß Fig. 3, mit einem Dichtelement 1, gemäß Fig. 2, auf, wobei das Bauteil 14, in diesem Fall, zur Schüssel 19 gehört und eine an dieser angeordnete Dichtfläche darstellt. Das erfindungsgemäße Dichtelement 1, verhindert, dass bei Rotation der Schüssel 19 Material aus der Schüssel 19 unter anderem in den Bereich des Maschinenständers 17 gelangen kann. Zudem wird auch ein Eindringen von Fremdmaterial in den Produktraum 20 verhindert. Zwischen dem Maschinenständer 17 und der Schüssel 19 ist ein weiteres Dichtelement 21 angebracht, welches mit einer Dichtlippe 22 ausgebildet ist. Die Dichtlippe 22 ist von der Schüssel 19 weggebogen, sodass Dampf welcher unterhalb der Schüssel 19 entsteht, insbe-sondere bei Kochmaschinen, die Dichtlippe 22 gegen die von der Schüssel 19 abgewandte Seite drückt und somit die Öffnung zwischen der Schüssel 19 und dem Maschinenständer 17 zusätzlich verschließt.

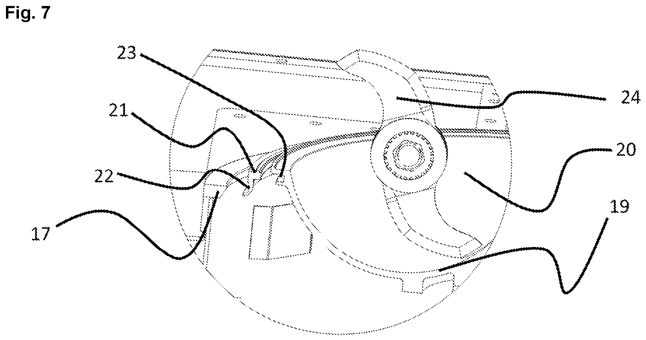

Fig. 6 zeigt eine Detailansicht eines Kutters 16 mit einem erfindungsgemäßen Dichtelement 1 zwischen der Schüssel 19 und dem Deckel 18 und Fig. 7 eine Detailansicht eines Kutters 16 mit einem erfindungsgemäßen Dichtelement 21 zwischen der Schüssel 19 und dem Maschinenständer 17. In der Schüssel 19 ist jeweils ein Werkzeug 24 positioniert, welches zum Rühren und Zerkleinern verwendet werden kann. Die Dichtelemente 1 und 21 können in einfacher Art und Weise aus der jeweiligen Dichtungsnut 10 und 23 entnommen werden, sodass sie leicht zu reinigen sind.

Alle in der Beschreibung, den nachfolgenden Zeichnungen und den nachfolgenden Patentansprüchen dargestellten Merkmale können sowohl einzeln als auch in beliebiger Kombination miteinander erfindungswesentlich sein.

### Bezugszahlenliste

- 1: Dichtelement
- 2: Aussparung
- 3: Federelement
- 4: Dichtungskörper
- 5: Oberseite
- 6: Unterseite
- 7: Längsseite
- 8: Stirnseite
- 9: Stirnseite
- 10: Dichtungsnut
- 11: Nutwand
- 12: Nutwand
- 13: Nutboden
- 14: Bauteil
- 15: Öffnung
- 16: Kutter
- 17: Maschinenständer
- 18: Deckel
- 19: Schüssel
- 20: Produktraum
- 21: Dichtelement
- 22: Dichtlippe
- 23: Dichtungsnut
- 24: Werkzeug

## Patentansprüche

1. Dichtungsanordnung, bestehend aus
- mindestens einem Dichtelement (1), das einen Dichtungskörper (4) aufweist, wobei der Dichtungskörper (4) mindestens eine Oberseite (5), mindestens eine Unterseite (6) und mindestens eine Längsseite (7) aufweist, und
- mindestens einer Dichtungsnut (10), wobei die Dichtungsnut (10) einen Nutboden (13) und mindestens eine Nutwand (11, 12) aufweist, wobei das mindestens eine Dichtelement (1) gleitend in der Dichtungsnut (10) gelagert ist,
**dadurch gekennzeichnet,**
**dass** der Dichtungskörper (4) des mindestens einen Dichtelements (1) mit mindestens einer Längsseite (7) schlüssig an mindestens einer Nutwand (11, 12) anliegt und zwischen dem Nutboden (13) und dem Dichtungskörper (4) mindestens ein Federelement (3) angeordnet ist, wobei das mindestens eine Federelement (3) aus mindestens einem anderen Material besteht als der Dichtungskörper (4) und das mindestens eine Federelement (3) aus einem härteren Material besteht als der Dichtungskörper (4) und dass das mindestens eine Federelement (3) eine Blattfeder ist,
oder der Dichtungskörper (4) des mindestens einen Dichtelements (1) mit mindestens einer Oberseite (5) und/oder Unterseite (6) schlüssig am Nutboden (13) anliegt und zwischen mindestens einer Nutwand (11, 12) und dem Dichtungskörper (4) mindestens ein Federelement (3) angeordnet ist, wobei das mindestens eine Federelement (3) aus mindestens einem anderen Material besteht als der Dichtungskörper (4) und das mindestens eine Federelement (3) aus einem härteren Material besteht als der Dichtungskörper (4) und dass das mindestens eine Federelement (3) eine Blattfeder ist.

2. Dichtungsanordnung, nach Anspruch 1,
**dadurch gekennzeichnet,**
**dass** das mindestens eine Federelement (3) an der Oberseite (5) und/oder der Unterseite (6) des Dichtelements (1) oder das mindestens eine Federelement (3) am Nutboden (13) und/oder der Nutwand (11, 12) angebracht ist.

3. Dichtungsanordnung, nach Anspruch 1 oder Anspruch 2,
**dadurch gekennzeichnet,**
**dass** das mindestens eine Dichtelement (1) zwischen zwei Nutwänden (11, 12) positioniert ist, sodass dieses jeweils mit einer Längsseite (7) an je einer Nutwand (11, 12) anliegt.

4. Dichtungsanordnung, nach einem der vorhergehenden Ansprüche,
**dadurch gekennzeichnet,**
**dass** das mindestens eine Federelement (3) lösbar am Dichtungskörper (4), an einer Nutwand (11, 12) und/oder am Nutboden (13) angebracht ist.

5. Dichtungsanordnung, nach einem der vorhergehenden Ansprüche,
**dadurch gekennzeichnet,**
**dass** der Dichtungskörper (4) einteilig und/oder mindestens teilweise flexibel biegbar ist.

6. Dichtungsanordnung, nach einem der vorhergehenden Ansprüche,
**dadurch gekennzeichnet,**
**dass** der Dichtungskörper (4) mindestens zwei Stirnseiten (8, 9) aufweist.

7. Dichtungsanordnung, nach Anspruch 6,
**dadurch gekennzeichnet,**
**dass** eine Stirnseite (8) so geformt ist, dass sie formschlüssig mit einer anderen Stirnseite (9) desselben Dichtelements (1) oder eines zweiten Dichtelements (1) in Verbindung gebracht werden kann.

8. Dichtungsanordnung, nach einem der vorhergehenden Ansprüche,
**dadurch gekennzeichnet,**
**dass** der Dichtungskörper (4) aus Messing, Ethylen-Propylen-Dien-Kautschuk (EPDM), Nitirl- Butadien-Kautschuk (NBR), Fluor-Kautschuk (FKM), hochfluoriertem FKM, Silikon, Polytetrafluorethylen (PTFE) und/oder Thermoplastischem Polyurethan (TPU) besteht.

9. Dichtungskonzept zum Abdichten eines Kutters (16), umfassend eine Dichtungsanordnung nach Anspruch 1, wobei der Kutter (16) eine rotierbare Schüssel (19), einen Deckel (18) und einen Maschinenständer (17) aufweist und zwischen dem Deckel (18) und der Schüssel (19) eine Öffnung (15) gebildet wird, wobei an der Öffnung (15) schüssel- und/oder deckelseitig eine Dichtungsnut (10) ausgebildet ist, wobei die Dichtungsnut (10) einen Nutboden (13) und mindestens eine Nutwand (11, 12) aufweist, wobei mindestens ein Dichtelement (1) gleitend in der Dichtungsnut (10) gelagert ist,
**dadurch gekennzeichnet,**
**dass** mindestens ein Dichtelement (1), das einen Dichtungskörper (4) aufweist, wobei der Dichtungskörper (4) mindestens eine Oberseite (5), mindestens eine Unterseite (6) und mindestens eine Längsseite (7) aufweist, verwendet wird und der Dichtungskörper (4) des mindestens einen Dichtelements (1) mit mindestens einer Längsseite (7) schlüssig an mindestens einer Nutwand (11, 12) anliegt und zwischen dem Nutboden (13) und dem Dichtungskörper (4) mindestens ein Federelement (3) angeordnet ist, wobei das mindestens eine Federelement (3) aus mindestens einem anderen Material besteht als der Dichtungskörper (4) und das mindestens eine Federelement (3) aus einem härteren Material besteht als der Dichtungskörper (4) und dass das mindestens eine Federelement (3) eine Blattfeder ist,
oder der Dichtungskörper (4) des mindestens einen Dichtelements (1) mit mindestens einer Oberseite (5) und/oder Unterseite (6) schlüssig am Nutboden (13) anliegt und zwischen mindestens einer Nutwand (11, 12) und dem Dichtungskörper (4) mindestens ein Federelement (3) angeordnet ist, wobei das mindestens eine Federelement (3) aus mindestens einem anderen Material besteht als der Dichtungskörper (4) und das mindestens eine Federelement (3) aus einem härteren Material besteht als der Dichtungskörper (4) und dass das mindestens eine Federelement (3) eine Blattfeder ist.

10. Dichtungskonzept, nach Anspruch 9,
**dadurch gekennzeichnet,**
**dass** zwischen dem Maschinenständer (17) und der Schüssel (19) und/oder zwischen dem Deckel (18) und dem Maschinenständer (17) mindestens ein weiteres Dichtelement (21) angeordnet ist.

11. Dichtungskonzept, nach Anspruch 10,
**dadurch gekennzeichnet,**
**dass** das mindestens eine Dichtelement (21) zwischen dem Maschinenständer (17) und der Schüssel (19) mindestens eine Dichtlippe (22) aufweist.

12. Dichtungskonzept, nach Anspruch 11,
**dadurch gekennzeichnet,**
**dass** die Dichtlippe (22) von der Schüssel (19) weg gebogen ist.

## Claims

1. A sealing arrangement consisting of
- at least one sealing element (1) which has a sealing body (4), the sealing body (4) having at least one top face (5), at least one bottom face (6), and at least one longitudinal face (7), and
- at least one sealing groove (10), the sealing groove (10) having a groove bottom (13) and at least one groove wall (11, 12), said at least one sealing element (1) being slidingly supported within the sealing groove (10),
**characterised in that**
the sealing body (4) of the at least one sealing element (1) has at least one longitudinal face (7) tightly applied to at least one groove wall (11, 12) and that at least one spring element (3) is arranged between the groove bottom (13) and the sealing body (4), said at least one spring element (3) consisting of at least one material other than the sealing body (4) and said at least one spring element (3) consisting of a harder material than the sealing body (4), and **in that** said at least one spring element (3) is a leaf spring,
or **in that** the sealing body (4) of the at least one sealing element (1) has at least one top face (5) and/or at least one bottom face (6) tightly applied to the groove bottom (13) and at least one spring element (3) is arranged between at least one groove wall (11, 12) and the sealing body (4), with the at least one spring element (3) consisting of at least one material other than the sealing body (4) and the at least one spring element (3) consisting of a harder material than the sealing body (4), and **in that** said at least one spring element (3) is a leaf spring.

2. The sealing arrangement as claimed in claim 1,
**characterised in that**
the at least one spring element (3) is arranged on the top face (5) and/or on the bottom face (6) of the sealing element (1) or the at least one spring element (3) is arranged on the groove bottom (13) and/or on the groove wall (11, 12).

3. The sealing arrangement as claimed in claim 1 or claim 2, **characterised in that**
the at least one sealing element (1) is positioned between two groove walls (11, 12) in such a manner that either longitudinal face (7) thereof is applied to a corresponding groove wall (11, 12).

4. The sealing arrangement as claimed in any of the preceding claims, **characterised in that**
the at least one spring element (3) is releasably arranged on the sealing body (4), on a groove wall (11, 12), and/or on the groove bottom (13).

5. The sealing arrangement as claimed in any of the preceding claims, **characterised in that**
the sealing body (4) is made in one piece and/or is at least in part flexibly bendable.

6. The sealing arrangement as claimed in any of the preceding claims, **characterised in that**
the sealing body (4) has at least two end faces (8, 9).

7. The sealing arrangement as claimed in claim 6,
**characterised in that**
one end face (8) is shaped in such a manner that it may be brought into positive connection with another end face (9) of the same sealing element (1) or of a second sealing element (1).

8. The sealing arrangement as claimed in any of the preceding claims, **characterised in that**
the sealing body (4) consists of brass, ethylene-propylene-diene rubber (EPDM), nitrile-butadiene rubber (NBR), fluorine rubber (FKM), highly fluorinated FKM, silicone, polytetrafluoroethylene (PTFE), and/or thermoplastic polyurethane (TPU).

9. A sealing concept for sealing a cutter (16) comprising a sealing arrangement as claimed in claim 1, the cutter (16) having a rotatable bowl (19), a cover (18), and a machine stand (17), with an opening (15) being formed between the cover (18) and the bowl (19), said opening (15) having a sealing groove (10) formed on the side of the bowl and/or on the side of the cover, said sealing groove (10) having a groove bottom (13) and at least one groove wall (11, 12), at least one sealing element (1) being slidingly supported within the sealing groove (10),
**characterised in that**
at least one sealing element (1) is used which has a sealing body (4), said sealing body (4) having at least one top face (5), at least one bottom face (6) and at least one longitudinal face (7), and **in that** the sealing body (4) of the at least one sealing element (1) has at least one longitudinal face (7) tightly applied to at least one groove wall (11, 12) and that at least one spring element (3) is arranged between the groove bottom (13) and the sealing body (4), with the at least one spring element (3) consisting of at least one material other than the sealing body (4) and the at least one spring element (3) consisting of a harder material than the sealing body (4), and **in that** said at least one spring element (3) is a leaf spring,
or **in that** the sealing body (4) of the at least one sealing element (1) has at least one top face (5) and/or at least one bottom face (6) tightly applied to the groove bottom (13) and at least one spring element (3) is arranged between at least one groove wall (11, 12) and the sealing body (4), with the at least one spring element (3) consisting of at least one material other than the sealing body (4) and the at least one spring element (3) consisting of a harder material than the sealing body (4), and **in that** said at least one spring element (3) is a leaf spring.

10. The sealing concept as claimed in claim 9,
**characterised in that**
at least one further sealing element (21) is arranged between the machine stand (17) and the bowl (19) and/or between the cover (18) and the machine stand (17).

11. The sealing concept as claimed in claim 10,
**characterised in that**
the at least one sealing element (21) arranged between the machine stand (17) and the bowl (19) has at least one sealing lip (22).

12. The sealing concept as claimed in claim 11,
**characterised in that**
the sealing lip (22) is bent so as to face away from the bowl (19).

## Revendications

1. Garniture d'étanchéité, constituée de
- au moins un élément d'étanchéité (1) qui présente un corps d'étanchéité (4), le corps d'étanchéité (4) présentant au moins une face supérieure (5), au moins une face inférieure (6) et au moins une face longitudinale (7), et
- au moins une rainure d'étanchéité (10), la rainure d'étanchéité (10) présentant un fond de rainure (13) et au moins une paroi de rainure (11, 12), ledit au moins un élément d'étanchéité (1) étant logé à glissement dans la rainure d'étanchéité (10),
**caractérisée en ce que**
le corps d'étanchéité (4) dudit au moins un élément d'étanchéité (1) repose, avec au moins une face longitudinale (7), contre au moins une paroi de rainure (11, 12) de manière à former une liaison étanche avec celle-ci et qu'au moins un élément élastique (3) est disposé entre le fond de rainure (13) et le corps d'étanchéité (4), ledit au moins un élément élastique (3) étant constitué en au moins un autre matériau que le corps d'étanchéité (4) et ledit au moins un élément élastique (3) étant constitué en un matériau plus dur que le corps d'étanchéité (4), et **en ce que** ledit au moins un élément élastique (3) est un ressort à lame,
ou le corps d'étanchéité (4) dudit au moins un élément d'étanchéité (1) repose, avec au moins une face supérieure (5) et/ou une face inférieure (6), contre le fond de rainure (13) de manière à former une liaison étanche avec celui-ci et qu'au moins un élément élastique (3) est disposé entre au moins une paroi de rainure (11, 12) et le corps d'étanchéité (4), ledit au moins un élément élastique (3) étant constitué en au moins un autre matériau que le corps d'étanchéité (4) et ledit au moins un élément élastique (3) étant constitué en un matériau plus dur que le corps d'étanchéité (4), et **en ce que** ledit au moins un élément élastique (3) est un ressort à lame.

2. Garniture d'étanchéité selon la revendication 1,
**caractérisée en ce que**
ledit au moins un élément élastique (3) est placé sur la face supérieure (5) et/ou sur la face inférieure (6) de l'élément d'étanchéité (1) ou que ledit au moins un élément élastique (3) est placé sur le fond de rainure (13) et/ou sur la paroi de rainure (11, 12).

3. Garniture d'étanchéité selon la revendication 1 ou selon la revendication 2,
**caractérisée en ce que**
ledit au moins un élément d'étanchéité (1) est positionné entre deux parois de rainure (11, 12) de sorte que ses faces longitudinales (7) reposent, chacune, contre respectivement une paroi de rainure (11, 12).

4. Garniture d'étanchéité selon l'une quelconque des revendications précédentes,
**caractérisée en ce que**
ledit au moins un élément élastique (3) est placé de manière amovible sur le corps d'étanchéité (4), sur une paroi de rainure (11, 12) et/ou sur le fond de rainure (13).

5. Garniture d'étanchéité selon l'une quelconque des revendications précédentes,
**caractérisée en ce que**
le corps d'étanchéité (4) est réalisé en une seule pièce et/ou peut être au moins en partie plié de manière flexible.

6. Garniture d'étanchéité selon l'une quelconque des revendications précédentes,
**caractérisée en ce que**
le corps d'étanchéité (4) présente au moins deux faces frontales (8, 9).

7. Garniture d'étanchéité selon la revendication 6,
**caractérisée en ce que**
une face frontale (8) est formée de manière à pouvoir être rattachée par conjugaison de formes à une autre face frontale (9) dudit même élément d'étanchéité (1) ou d'un deuxième élément d'étanchéité (1).

8. Garniture d'étanchéité selon l'une quelconque des revendications précédentes,
**caractérisée en ce que**
le corps d'étanchéité (4) est constitué en laiton, en caoutchouc éthylène-propylène-diène (EPDM), en caoutchouc butadiène-acrylonitrile (NBR), en caoutchouc fluoré (FKM), en FKM hautement fluoré, en silicone, en polytétrafluoroéthylène (PTFE) et/ou en polyuréthane thermoplastique (TPU).

9. Concept d'étanchéité permettant d'étanchéifier un cutter (16), ledit concept comprenant une garniture d'étanchéité selon la revendication 1, le cutter (16) présentant une cuve (19) rotative, un couvercle (18) et un support de machine (17), et une ouverture (15) étant formée entre le couvercle (18) et la cuve (19), une rainure d'étanchéité (10) étant formée, côté cuve et/ou côté couvercle, au niveau de l'ouverture (15), la rainure d'étanchéité (10) présentant un fond de rainure (13) et au moins une paroi de rainure (11, 12), au moins un élément d'étanchéité (1) étant logé à glissement dans la rainure d'étanchéité (10),
**caractérisé en ce que**
on utilise au moins un élément d'étanchéité (1) qui présente un corps d'étanchéité (4), ledit corps d'étanchéité (4) présentant au moins une face supérieure (5), au moins une face inférieure (6) et au moins une face longitudinale (7), et que le corps d'étanchéité (4) dudit au moins un élément d'étanchéité (1) repose, avec au moins une face longitudinale (7), contre au moins une paroi de rainure (11, 12) de manière à former une liaison étanche avec celle-ci et qu'au moins un élément élastique (3) est disposé entre le fond de rainure (13) et le corps d'étanchéité (4), ledit au moins un élément élastique (3) étant constitué en au moins un autre matériau que le corps d'étanchéité (4) et ledit au moins un élément élastique (3) étant constitué en un matériau plus dur que le corps d'étanchéité (4), et **en ce que** ledit au moins un élément élastique (3) est un ressort à lame,
ou le corps d'étanchéité (4) dudit au moins un élément d'étanchéité (1) repose, avec au moins une face supérieure (5) et/ou une face inférieure (6), contre le fond de rainure (13) de manière à former une liaison étanche avec celui-ci et qu'au moins un élément élastique (3) est disposé entre au moins une paroi de rainure (11, 12) et le corps d'étanchéité (4), ledit au moins un élément élastique (3) étant constitué en au moins un autre matériau que le corps d'étanchéité (4) et ledit au moins un élément élastique (3) étant constitué en un matériau plus dur que le corps d'étanchéité (4), et **en ce que** ledit au moins un élément élastique (3) est un ressort à lame.

10. Concept d'étanchéité selon la revendication 9,
**caractérisé en ce que**
au moins un autre élément d'étanchéité (21) est disposé entre le support de machine (17) et la cuve (19) et/ou entre le couvercle (18) et le support de machine (17).

11. Concept d'étanchéité selon la revendication 10,
**caractérisé en ce que**
ledit au moins un élément d'étanchéité (21) disposé entre le support de machine (17) et la cuve (19) présente au moins une lèvre d'étanchéité (22).

12. Concept d'étanchéité selon la revendication 11,
**caractérisé en ce que**
la lèvre d'étanchéité (22) est recourbée vers l'extérieur par rapport à la cuve (19).
